# EUROPÄISCHE PATENTSCHRIFT

(11) **EP 2 939 848 B1**
(45) Veröffentlichungstag und Bekanntmachung des Hinweises auf die Patenterteilung: **09.08.2017**
(21) Anmeldenummer: 15163904.4
(22) Anmeldetag: 16.04.2015
(51) Int. Cl.: B60B 19/14, B60B 37/10, E03F 9/00

(54) **SCHNELLWECHSELSYSTEM FÜR RÄDER**
QUICK CHANGE SYSTEM FOR WHEELS
SYSTÈME DE CHANGEMENT RAPIDE DE ROUES

(30) Priorität: 16.04.2014 DE 202014101827 U
(43) Veröffentlichungstag der Anmeldung: 04.11.2015
(73) Patentinhaber: iPEK International GmbH, 87477 Sulzberg (DE)
(72) Erfinder: Pomp, Dominik, 87447 Waltenhofen (DE)
(74) Vertreter: 2s | ip Schramm Schneider Patentanwälte Rechtsanwälte

(56) Entgegenhaltungen:
- CN-A- 102 444 786
- DE-U1-202013 104 734
- US-A- 2 589 556

## Beschreibung

### Gebiet der Erfindung

Die Erfindung betrifft ein Wechselsystem für Fahrwagenräder eines Inspektionswagens zum schnellen Wechseln von Fahrwagenrädern, eine Reifenaufnahme für ein erfindungsgemäßes Schnellwechselsystem sowie einen Inspektionswagen mit einer Anzahl erfindungsgemäßer Schnellwechselsysteme.

### Hintergrund der Erfindung und Stand der Technik

Für die Inspektion von Kanälen, insbesondere Abwasserkanälen, Anschlusskanälen oder sonstiger abwassertechnischer Anlagen, wird herkömmlicherweise ein selbstfahrender Wagen bzw. Inspektionswagen eingesetzt. Ähnliche Wagen bzw. Fahrzeuge werden auch zu Reinigungszwecken in den Kanälen eingesetzt. Die Inspektionswagen bzw. Reinigungswagen weisen hierzu Räder auf, mit denen ein Bewegen des Wagens im Kanal bzw. in der Rohrleitung bewerkstelligt wird. In Abhängigkeit beispielsweise des Kanal- bzw. Rohrdurchmessers muss der Inspektions- bzw. Reinigungswagen mit Rädern bestückt werden, die vorzugsweise eine an den Rohr- bzw. Kanaldurchmesser angepasste Bereifung aufweisen. Hierbei ist es wünschenswert, die Räder samt der Bereifung lösbar an den Fahrwagenachsen anzuordnen, um ein Austauschen der Räder zu ermöglichen, sodass ein Inspektions- bzw. Reinigungswagen in unterschiedlichen Kanälen bzw. Rohren verwendet werden kann.

Im Stand der Technik ist es bekannt, die Räder eines Inspektions- bzw. Reinigungsfahrzeuges mit einer oder mehreren Schrauben an der Fahrwagenachse zu befestigen. Dies hat allerdings den Nachteil, dass einerseits Werkzeuge zum Lösen der Schrauben benötigt werden und andererseits die gelösten Schrauben und gegebenenfalls Unterlegscheiben leicht verloren gehen können, sodass es zu Ausfallzeiten des Inspektions- bzw. Reinigungswagens kommen kann.

Zudem nimmt der Wechsel der Fahrwagenräder eine gewisse Zeit in Anspruch, weil für jedes Rad die jeweiligen Befestigungsschrauben gelöst und nach dem Wechsel des Rades wieder eingeschraubt werden müssen. Ein weiterer Nachteil liegt darin, dass, sofern die benötigten Werkzeuge für den Radwechsel nicht zur Verfügung stehen, ein Radwechsel überhaupt nicht vorgenommen werden kann.

Aus der DE 20 2013 104 734 U1 ist ein Schnellwechselsystem für Fahrwagenräder eines Inspektionswagens bekannt, das einen Achsadapter und eine Verriegelungseinrichtung zum axialen Verriegeln einer Reifenaufnahme auf dem Achsadapter umfasst, wobei
- die Verriegelungseinrichtung zumindest ein Verriegelungselement und eine mit dem zumindest einen Verriegelungselement zusammenwirkende Entriegelungseinrichtung umfasst, wobei das zumindest eine Verriegelungselement in einer Verriegelungsposition die Reifenaufnahme auf dem Achsadapter axial verriegelt, und
- die Entriegelungseinrichtung und das zumindest eine Verriegelungselement so zusammenwirken, dass beim Bewegen der Entriegelungseinrichtung das zumindest eine Verriegelungselement von der Verriegelungsposition in eine Entriegelungsposition bringbar ist, in der die Reifenaufnahme axial entriegelt ist,

### Aufgabe der Erfindung

Aufgabe der vorliegenden Erfindung ist es daher, Lösungen bereitzustellen, mit denen Räder eines Inspektions- bzw. Reinigungswagens, insbesondere eines Kanalinspektions- und/oder Kanalreinigungssystems, schneller, komfortabler, sicherer und insbesondere Werkzeuglos gewechselt werden können.

### Erfindungsgemäße Lösung

Erfindungsgemäß wird diese Aufgabe mit einem Schnellwechselsystem für Fahrwagenräder, insbesondere für Fahrwagenräder eines Inspektionswagens, insbesondere Kanalinspektions- und/oder Kanalreinigungswagen, eine Reifenaufnahme für ein erfindungsgemäßes Schnellwechselsystem, eine Schnellwechseleinrichtung mit einem erfindungsgemäßen Schnellwechselsystem und einer erfindungsgemäßen Reifenaufnahme, sowie mit einem Inspektionswagen mit einer Anzahl von erfindungsgemäßen Schnellwechselsystemen, gemäß den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Schnellwechselsystem für Fahrwagenräder, insbesondere für Fahrwagenräder eines Inspektionswagens, insbesondere Kanalinspektions- und/oder Kanalreinigungswagen, umfassend einen Achsadapter und eine Verriegelungseinrichtung zum axialen Verriegeln einer Reifenaufnahme auf dem Achsadapter, wobei
- die Verriegelungseinrichtung zumindest ein Verriegelungselement und eine mit dem zumindest einen Verriegelungselement zusammenwirkende Entriegelungseinrichtung umfasst, wobei das zumindest eine Verriegelungselement in einer Verriegelungsposition die Reifenaufnahme auf dem Achsadapter axial verriegelt,
- die Entriegelungseinrichtung und das zumindest eine Verriegelungselement so zusammenwirken, dass beim Bewegen der Entriegelungseinrichtung das zumindest eine Verriegelungselement von der Verriegelungsposition in eine Entriegelungsposition bringbar ist, in der die Reifenaufnahme axial entriegelt ist, und
- in einer Seitenwandung des Achsadapters zumindest ein Durchgangsloch vorgesehen ist, in dem das Verriegelungselement relativ zum Durchgangsloch bewegbar angeordnet ist, wobei das Verriegelungselement in der Verriegelungsposition zumindest teilweise aus dem Durchgangsloch herausragt und dadurch die Reifenaufnahme axial verriegelt.

Vorzugsweise ist die Entriegelungseinrichtung in axialer Richtung entlang der Längsachse des Schnellwechselsystems bewegbar. Alternativ kann die Entriegelungseinrichtung auch um die Längsachse des Schnellwechselsystems drehbar sein, um das zumindest eine Verriegelungselement von der Verriegelungsposition in die Entriegelungsposition zu bringen.

Damit ist es möglich, die Reifenaufnahme, etwa eine Felge, werkzeuglos von dem Achsadapter abzunehmen. Hierzu muss lediglich die Entriegelungseinrichtung in axialer Richtung bewegt werden oder um ihre Längsachse gedreht werden, um das zumindest eine Verriegelungselement in eine Entriegelungsposition zu bringen. Das Bewegen in axialer Richtung kann beispielsweise durch Drücken auf die Entriegelungseinrichtung bewerkstelligt werden.

Das zumindest eine Verriegelungselement kann einen Stift, einen Zapfen, zumindest eine Kugel, einen Haken oder einen Magneten umfassen.

Der Stift oder der Zapfen kann zumindest eine wandungsseitige Aussparung aufweisen, die im Wesentlichen quer zur Längsachse des Stiftes bzw. des Zapfens verläuft.

Vorteilhaft ist es, wenn die wandungsseitige Aussparung eine schräge Seitenwandung aufweist, die in einem Winkel zur Querachse des Stiftes bzw. des Zapfens angeordnet ist bzw. verläuft.

Die Entriegelungseinrichtung kann als Entriegelungskappe mit einer umlaufenden Seitenwandung ausgestaltet sein, wobei die Entriegelungseinrichtung derart relativ zum Achsadapter anordenbar ist, dass die Seitenwandung der Entriegelungskappe zumindest teilweise innerhalb der Seitenwandung des Achsadapters angeordnet ist und dass die Entriegelungskappe in axialer Richtung entlang der Längsachse des Schnellwechselsystems relativ zum Achsadapter bewegbar ist.

In der Seitenwandung der Entriegelungskappe kann zumindest ein randseitiger Schlitz vorgesehen sein, in den der Stift bzw. der Zapfen im Bereich seiner wandungsseitigen Aussparung in Eingriff bringbar ist. Die Breite des Schlitzes ist hierbei vorzugsweise kleiner als der Durchmesser des Stiftes bzw. des Zapfens.

Die Entriegelungskappe und der Stift bzw. der Zapfen wirken vorzugsweise so zusammen, dass beim Bewegen der Entriegelungskappe in axialer Richtung ein Endabschnitt des Schlitzes auf die schräge Seitenwandung der wandungsseitigen Aussparung des Stiftes bzw. des Zapfens wirkt und dadurch den Stift bzw. den Zapfen radial nach innen bewegt. Damit wird es in vorteilhafter Weise möglich, die Reifenaufnahme werkzeuglos von dem Achsadapter abzunehmen, weil sich die radial nach innen bewegten Verriegelungselemente bzw. Stifte bzw. Zapfen in einer Entriegelungsposition befinden und die Reifenaufnahme damit axial entriegelt ist.

Damit ist es in vorteilhafter Weise möglich, eine Reifenaufnahmen sowohl werkzeuglos von dem Achsadapter abzunehmen als auch werkzeuglos auf dem Achsadapter anzubringen.

In einer Ausgestaltung der Erfindung ist dem Verriegelungselement ein Federelement zugeordnet, dessen Federkraft das Verriegelungselement radial nach außen drückt. Damit wird gewährleistet, dass eine auf den Achsadapter aufgeschobene Reifenaufnahme automatisch axial verriegelt ist.

Wenn als Verriegelungselemente Kugeln vorgesehen sind, ist es vorteilhaft, wenn die Kugeln in der Verriegelungsposition in eine Kulissenaussparung an der Innenwandung der Reifenaufnahme eingreifen. Den Kugeln kann ebenfalls ein Federelement zugeordnet sein, die die Kugeln radial nach außen drücken.

Wenn als Verriegelungselemente Kugeln vorgesehen sind, ist es vorteilhaft, wenn an der Außenwand der Seitenwandung der Entriegelungseinrichtung eine Aussparung vorgesehen ist, wobei die Tiefe der Aussparung in axialer Richtung zunimmt und wobei die Kugeln in die Aussparung in Eingriff gebracht werden können.

Bei Verwendung von Kugeln als Verriegelungselemente ist es vorteilhaft, wenn bei einem axialen Bewegen der Entriegelungseinrichtung relativ zum Achsadapter und
- in Richtung zur geringeren Tiefe der Aussparung der Entriegelungseinrichtung die Kugel in die Entriegelungsposition bringbar ist und
- in Richtung zur größeren Tiefe der Aussparung der Entriegelungseinrichtung die Aussparung ein Bewegen der Kugel in die Verriegelungsposition bewirkt.

In einer Ausgestaltung der Erfindung weist der Achsadapter einen koaxialen Führungsbolzen auf, der in axialer Richtung in eine dafür vorgesehene Aussparung der Entriegelungseinrichtung eingreift.

In dem Führungsbolzen können Sackbohrungen zur Aufnahme der Federelemente vorgesehen sein.

Vorzugsweise sind die Sackbohrungen koaxial zu den Durchgangslöchern der Seitenwandung des Achsadapters angeordnet. Die Sackbohrungen weisen vorteilhafterweise den gleichen Durchmesser wie die Durchgangslöcher auf. Damit ist gewährleistet, dass die in den Durchgangslöchern angeordneten Verriegelungselemente gegen die Federkraft des Federelementes zumindest teilweise in die Sackbohrungen verschoben werden können.

In einer vorteilhaften Ausgestaltung des erfindungsgemäßen Schnellwechselsystems bildet die Entriegelungseinrichtung einen Druckknopf zum axialen Entriegeln der Reifenaufnahme, wobei durch Drücken des Druckknopfes die Verriegelungselemente von einer Verriegelungsposition in eine Entriegelungsposition bringbar sind bzw. die Verriegelungselemente freigegeben werden, damit diese von einer Verriegelungsposition in eine Entriegelungsposition gebracht werden können.

In einer vorteilhaften Ausgestaltung des erfindungsgemäßen Schnellwechselsystems weist die Seitenwandung des Achsadapters zumindest bis zu einer vorbestimmten Höhe einen Außenquerschnitt auf, der mit einem Innenquerschnitt der Reifenaufnahmen korrespondiert und ein Drehen der Reifenaufnahmen um die Längsachse des Schnellwechselsystems relativ zum Achsadapter verhindert. Damit wird die Reifenaufnahmen auf dem Achsadapter radial verriegelt, wobei auch hierfür keinerlei Werkzeuge notwendig sind.

In einer vorteilhaften Ausgestaltung ist der Außenquerschnitt ellipsenförmig, poligonförmig, drei- oder mehreckig, sternförmig, zahnradförmig oder rund mit einer radialen Passfeder ausgestaltet.

Die Reifenaufnahme weist jeweils einen entsprechenden Innenquerschnitt auf.

Bereitgestellt wird durch die Erfindung ferner eine Reifenaufnahmen für ein erfindungsgemäßes Schnellwechselsystem, wobei die Reifenaufnahmen an einer Innenwandung eine zumindest teilweise umlaufende Kulissenaussparung aufweist, in die die Verriegelungselemente des Schnellwechselsystems in Eingriff bringbar sind und die Reifenaufnahme axial verriegeln, wenn die Reifenaufnahmen auf den Achsadapter des Schnellwechselsystems axial aufgeschoben wird.

Die Kulissenaussparung kann einen im Wesentlichen halbkreisförmigen Querschnitt aufweisen. Dieser Querschnitt ist dann von Vorteil, wenn als Verriegelungselemente des Schnellwechselsystems Kugeln verwendet werden.

In einer Ausgestaltung der erfindungsgemäßen Reifenaufnahme kann die umlaufende Kulissenaussparung zwei gegenüberliegende Seitenwandungen aufweisen, wobei eine axial innenliegende Seitenwandung der beiden Seitenwandungen um einen ersten Winkel zur Querachse der Reifenaufnahme, der kleiner als 90° ist, geneigt ist. Damit wird ermöglicht, dass ein Verriegelungselement, beispielsweise ein Zapfen oder Stift, während des Aufschiebens der Reifenaufnahme auf den Achsadapter langsam in die umlaufende Kulissenaussparung geschoben wird.

Das Verriegelungselement des Schnellwechselsystems kann um einen zweiten Winkel zur Querachse der Reifenaufnahme, der kleiner als 90° ist, geneigt sein, wobei der erste Winkel größer ist als der zweite Winkel. Dadurch ist gewährleistet, dass die auf den Achsadapter aufgeschobene Reifenaufnahme kein Spiel in axialer Richtung aufweist.

Es hat sich als vorteilhaft herausgestellt, wenn die Differenz zwischen dem ersten Winkel und dem zweiten Winkel so gewählt ist, dass sich zwischen der axial innenliegenden Seitenwandung und dem Verriegelungselement in einer Verriegelungsposition ein Kraftschluss ergibt, der ein Lösen der Reifenaufnahme von dem Achsadapter verhindert.

Die dem Achsadapter bzw. der Fahrwagenachse zugewandte Seite der Reifenaufnahme kann einen Innenquerschnitt aufweisen, der mit einem Außenquerschnitt des Achsadapters des Schnellwechselsystems korrespondiert und ein Drehen der Reifenaufhahme um die Längsachse des Schnellwechselsystems relativ zum Achsadapter verhindert.

Bereitgestellt wird durch die Erfindung des Weiteren eine Schnellwechseleinrichtung, umfassend ein erfindungsgemäßes Schnellwechselsystem und eine mit dem erfindungsgemäßen Schnellwechselsystem korrespondierende erfindungsgemäße Reifenaufnahme.

Ferner wird durch die Erfindung ein Inspektionswagen, insbesondere Kanalinspektions- und/oder Kanalreinigungswagen, bereitgestellt, der eine Anzahl von erfindungsgemäßen Schnellwechselsystemen aufweist.

Die Schnellwechselsysteme sind vorzugsweise an den Radachsen des Inspektionswagens angebracht.

In einer Ausgestaltung der Erfindung können die Schnellwechselsysteme lösbar an den Radachsen angebracht sein, beispielsweise mittels einer Schraubverbindung.

An einem Endabschnitt der Radachse kann ein radialer Zapfen angeordnet sein, der in eine entsprechende Aussparung des Achsadapters des Schnellwechselsystems in Eingriff bringbar ist und ein Drehen des Schnellwechselsystems um die Längsachse der Radachse relativ zur Radachse verhindert.

Die Erfindung bringt insbesondere den Vorteil mit sich, dass Räder bzw. Fahrwagenräder werkzeuglos montiert, demontiert bzw. ausgewechselt werden können. Weil das Lösen von Schraubverbindungen zum Abnehmen von Fahrwagenrädern bzw. Reifenaufnahmen entfällt und weil das zu montierende Fahrwagenrad lediglich auf die Fahrwagenachse aufgeschoben werden muss und für die Demontage des Fahrwagenrades lediglich die Entriegelungseinrichtung in axialer Richtung verschoben werden muss ist ein Radwechsel auch wesentlich schneller bewerkstelligbar, als bei aus dem Stand der Technik bekannten Fahrwagenrädern.

Weil keinerlei Schrauben oder sonstigen lösbaren Teile an dem Schnellwechselsystem bzw. an der Reifenaufnahme vorhanden sind, können diese auch nicht verloren gehen, sodass Stillstandzeiten erheblich reduziert werden können.

Ein weiterer besonderer Vorteil liegt darin, dass sämtliche beweglichen Elemente an bzw. in dem Schnellwechselsystem angeordnet sind, während die Reifenaufnahme, die auf den Achsadapter des Schnellwechselsystems aufgeschoben wird, keinerlei beweglichen Teile aufweist und vorzugsweise einteilig bzw. einstückig ausgestaltet ist, was die Herstellungskosten bzw. den Herstellungsaufwand für erfindungsgemäße Reifenaufnahmen erheblich reduziert.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein Beispiel eines Inspektions- bzw. Reinigungswagens mit drei Fahrwagenachsen zur Verdeutlichung des Grundprinzips des erfindungsgemäßen Schnellwechselsystems;
- Fig. 2: einen erfindungsgemäßen Achsadapter in einer Ansicht von vorne, in einer Seitenansicht, in einer Schnittansicht und in einer perspektivischen Ansicht, wobei auch die axiale Verriegelungseinrichtung gezeigt ist;
- Fig. 3: eine erfindungsgemäße axiale Verriegelungseinrichtung in einer Ansicht von vorne, in einer Schnittansicht, in einer perspektivischen Ansicht von schräg hinten und in einer perspektivischen Ansicht von schräg vorne;
- Fig. 4: eine Entriegelungseinrichtung einer erfindungsgemäßen axialen Verriegelungseinrichtung in einer perspektivischen Ansicht;
- Fig. 5: ein Beispiel eines erfindungsgemäßen Verriegelungselements einer axialen Verriegelungseinrichtung in einer perspektivischen Ansicht;
- Fig. 6: eine Schnittansicht eines erfindungsgemäßen Achsadapters;
- Fig. 7: Beispiele eines Verriegelungselements mit auf das Verriegelungselement wirkende Entriegelungseinrichtungen zur Verdeutlichung des Wirkprinzips eines Entriegelungsvorganges;
- Fig. 8: einen Achsadapter mit einem darin angeordneten Verriegelungselement zur Verdeutlichung des Wirkprinzips eines Verriegelungsvorganges;
- Fig. 9: einen Querschnitt durch eine Reifenaufnahme und ein in die Kulissenaussparung der Reifenaufnahme eingreifendes Verriegelungselement;
- Fig. 10: ein Beispiel einer erfindungsgemäßen Schnellwechseleinrichtung mit Kugeln als Verriegelungselemente;
- Fig. 11: mehrere Ausführungsbeispiele für Außenquerschnitte der Seitenwandung eines erfindungsgemäßen Achsadapters bzw. für Innenquerschnitte einer erfindungsgemäßen Reifenaufnahme; und
- Fig. 12: ein Beispiels einer Reifens an einer Reifenaufnahme.

### Detaillierte Beschreibung der Erfindung

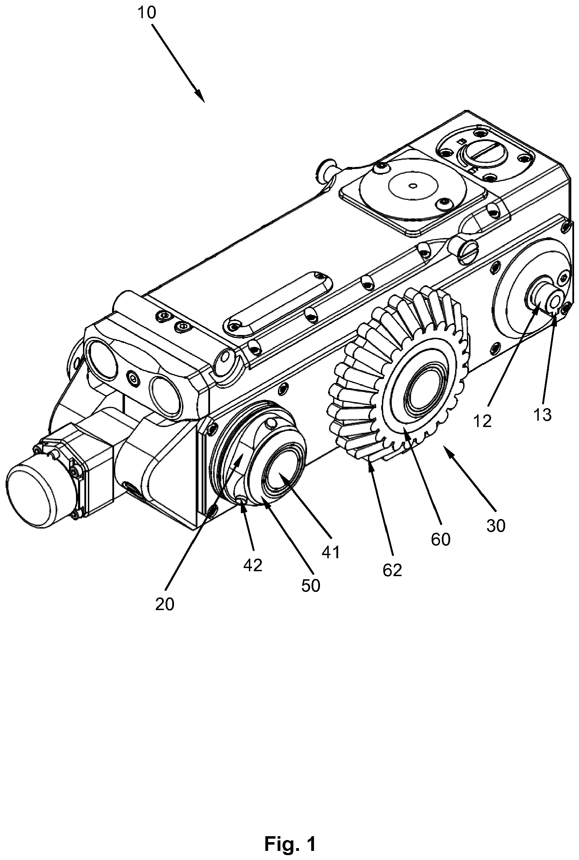

Fig. 1 zeigt ein Beispiel eines Inspektions- bzw. Reinigungswagens 10, der beispielsweise als Kamerawagen zur Inspektion von Kanal- bzw. Rohrleitungen ausgestaltet sein kann. Bei der in Fig. 1 gezeigten Darstellung des Inspektions- bzw. Reinigungswagens 10 sind nur die für die vorliegende Erfindung wesentlichen Elemente des Inspektionswagens gezeigt. Der Inspektions- bzw. Reinigungswagen 10 kann weitere hier nicht gezeigte Aufbauten bzw. Anbauten aufweisen.

Der in Fig. 1 gezeigte Inspektions- bzw. Reinigungswagen 10 weist drei Rad- bzw. Fahrwagenachsen 12 auf. Selbstverständlich kann ein Inspektions- bzw. Reinigungswagen 10 auch mehr als drei bzw. weniger als drei Fahrwagenachsen 12 aufweisen.

An dem freien Ende weist die im Wesentlichen zylindrische Fahrwagenachse 12 einen radialen Zapfen 13 auf, der als Verdrehsicherung für einen auf die Fahrwagenachse 12 aufgesetzten Achsadapter 20 eines erfindungsgemäßen Schnellwechselsystems 30 dient. Der Achsenendabschnitt der Fahrwagenachse 12 kann aber auch einen rechteckigen bzw. quadratischen Querschnitt aufweisen, sodass eine Verdrehsicherung eines aufgesetzten Achsadapters 20 bereits aufgrund der Geometrie des Achsenendabschnittes gegeben ist und auf den hier gezeigten radialen Zapfen 13 auch verzichtet werden kann.

In dem in Fig. 1 gezeigten Beispiel ist an der linken Radachse ein Achsadapter 20 angeordnet, der mit einer in Fig. 1 nicht sichtbaren Schraube fest mit der Fahrwagenachse 12 verbunden ist. Ferner ist an der linken Radachse bzw. an dem Achsadapter 20 eine axiale Verriegelungseinrichtung angeordnet, wobei in Fig. 1 ein Teil der Entriegelungseinrichtung 41 und Verriegelungselemente 42 der axialen Verriegelungseinrichtung sichtbar sind.

An dem Achsadapter 20 bzw. an der Entriegelungseinrichtung 41 ist eine Abdeckkappe 50 angeordnet, die eine kreisförmige Öffnung aufweist, in die die Entriegelungseinrichtung 41 hineinragt und die verhindert, dass die Entriegelungseinrichtung 41 von dem Achsadapter 20 gelöst werden kann.

Auf den Achsadapter 20 wird das Rad bzw. eine Reifenaufnahmen 60 (z.B. eine Felge) bis zum Anschlag aufgeschoben, wobei die aufgeschobene Reifenaufnahme 60 mittels der Verriegelungselemente 42 axial verriegelt wird, sodass sich die Reifenaufnahme 60 nicht selbstständig von dem Achsadapter 20 lösen kann. Die Verriegelungselemente 42 greifen hierbei in hierfür vorgesehene Aussparungen der Reifenaufnahme ein.

Durch die Geometrie des Achsadapters 20 und den Innenquerschnitt der Reifenaufnahme 60 ist zudem gewährleistet, dass sich die montierte Reifenaufnahmen nicht relativ zum Achsadapter 20 um die Längsachse der Fahrwagenachse drehen kann.

An der Reifenaufnahme 60 ist ein Reifen 62 angeordnet, wobei durch Betätigen der Entriegelungseinrichtung 41, wie nachfolgend genauer beschrieben wird, die Reifenaufnahme 60 mit dem Reifen 62 von dem Achsadapter 20 abgenommen werden kann. Die Reifen 62 können verschiedene Außendurchmesser bzw. verschiedene Profile aufweisen.

Durch das erfindungsgemäße Schnellwechselsystem 30 wird es in vorteilhafter Weise möglich, dass die Montage und die Demontage eines Rades, d.h. einer Reifenaufnahme mit dem daran angeordneten Reifen vollständig werkzeuglos bewerkstelligt werden kann, was Rüstzeiten erheblich reduzieren kann.

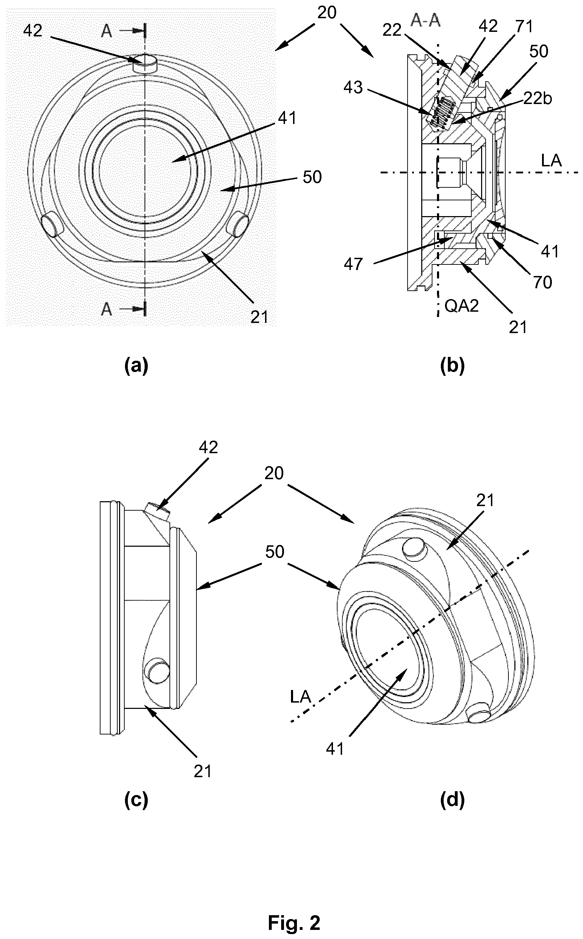

**Fig. 2** zeigt ein erfindungsgemäßes Schnellwechselsystem mit einem Achsadapter und einer daran angeordneten Verriegelungseinrichtung, wobei in Abbildung (a) eine Ansicht von vorne, in Abbildung (b) eine Schnittansicht entlang der Schnittachse A-A, in Abbildung (c) eine Seitenansicht und in Abbildung (d) eine perspektivische Ansicht des Schnellwechselsystems gezeigt sind.

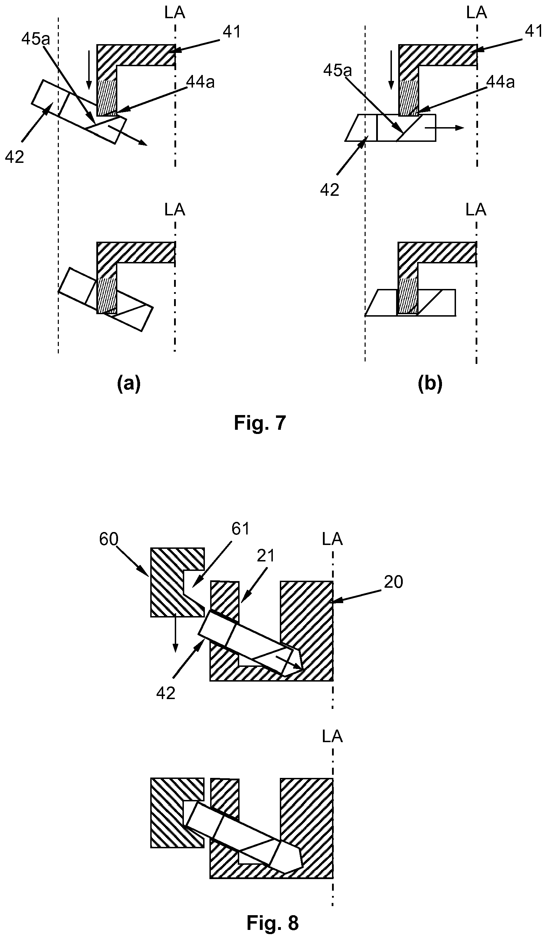

Das erfindungsgemäße Schnellwechselsystem umfasst einen Achsadapter 20, der an der Fahrwagenachse befestigt wird, wobei der Achsadapter lösbar oder fest mit der Fahrwagenachse verbunden sein kann. Ferner umfasst das erfindungsgemäße Schnellwechselsystem eine Verriegelungseinrichtung, die eine Anzahl von Verriegelungselementen 42 und eine mit den Verriegelungselementen 42 zusammenwirkende Entriegelungseinrichtung 41 umfasst. Die Verriegelungselemente 42 können mit Hilfe der Entriegelungseinrichtung 41 von einer Verriegelungsposition in eine Entriegelungsposition gebracht werden, wie mit Bezug auf Fig. 7 näher beschrieben wird.

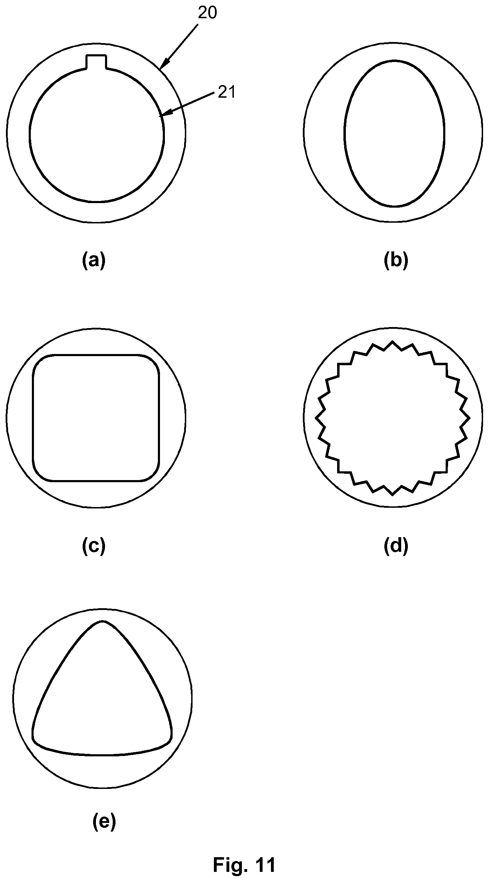

Der Achsadapter 20 weist eine umlaufende Seitenwandung 21 auf, wobei die Seitenwandung ein kreisförmiges Außenprofil aufweisen kann. Vorteilhaft ist es allerdings, wenn ein unterer Abschnitt, d.h. ein der Fahrwagenachse zugewandter Abschnitt der Seitenwandung 21 kein kreisförmiges Außenprofil aufweist, sondern ein Außenprofil, das ein Drehen der auf den Achsadapter 20 aufgeschobenen Reifenaufnahme um die Längsachse LA des Achsadapters relativ zum Achsadapter verhindert. Bei dem in Fig. 2 gezeigten Ausführungsbeispiel weist die Seitenwandung 21 ein Außenprofil mit drei im Wesentlichen geraden Abschnitten, wobei jeweils zwei gerade Abschnitte durch einen gekrümmten Abschnitt verbunden sind, auf. Die Geometrie des Außenprofils der Seitenwandung 21 bildet so eine effektive Verdrehsicherung der Reifenaufnahmen gegen den Achsadapter. Weitere Geometrien einer Seitenwandung 21 eines erfindungsgemäßen Achsadapters sind in Fig. 11 gezeigt.

In der Seitenwandung 21 des Achsadapters sind Durchgangslöcher bzw. Durchgangsbohrungen 22 vorgesehen, wobei in jedem Durchgangsloch 22 ein Verriegelungselement 42 angeordnet ist. Bei dem in Fig. 2 gezeigten Ausführungsbeispiel weisen die Durchgangslöcher 22 einen runden Querschnitt auf. Die Verriegelungselemente 42 sind als zylinderförmige Zapfen bzw. Stifte ausgestaltet. Erfindungsgemäß sind die Verriegelungselemente 42 relativ zum Durchgangsloch 22 bewegbar in dem Durchgangsloch 22 angeordnet, wobei die Verriegelungselemente 42 von einer Verriegelungsposition in eine Entriegelungsposition bewegbar sind. Wenn sich die Verriegelungselemente 42 in einer Verriegelungsposition befinden, ragen diese zumindest teilweise aus dem Durchgangsloch 22 heraus und greifen in eine an der Reifenaufnahme 60 vorgesehene Aussparung ein, sodass die Verriegelungselemente 22 die Reifenaufnahme axial verriegeln.

Bei dem in Fig. 2 gezeigten Ausführungsbeispiel sind in dem Achsadapter 20 eine Anzahl von Federelementen 43 vorgesehen, wobei jedem Verriegelungselement 42 ein Federelement 43 zugeordnet ist. Die Federkraft des Federelementes 43 bewirkt, dass das ihr zugeordnete Verriegelungselement 42 im Wesentlichen radial nach außen gedrückt wird. Damit wird ermöglicht, dass die Reifenaufnahme nach dem vollständigen Aufschieben auf den Achsadapter automatisch axial verriegelt wird.

Bei dem in Fig. 2 gezeigten Ausführungsbeispiel weist das Schnellwechselsystem drei Verriegelungselemente 42 auf. Je nach Anforderung können aber auch mehr als drei oder weniger als drei Verriegelungselemente 42 vorgesehen sein. Vorzugsweise sind die Verriegelungselemente 42 in Umfangsrichtung gleichmäßig verteilt angeordnet.

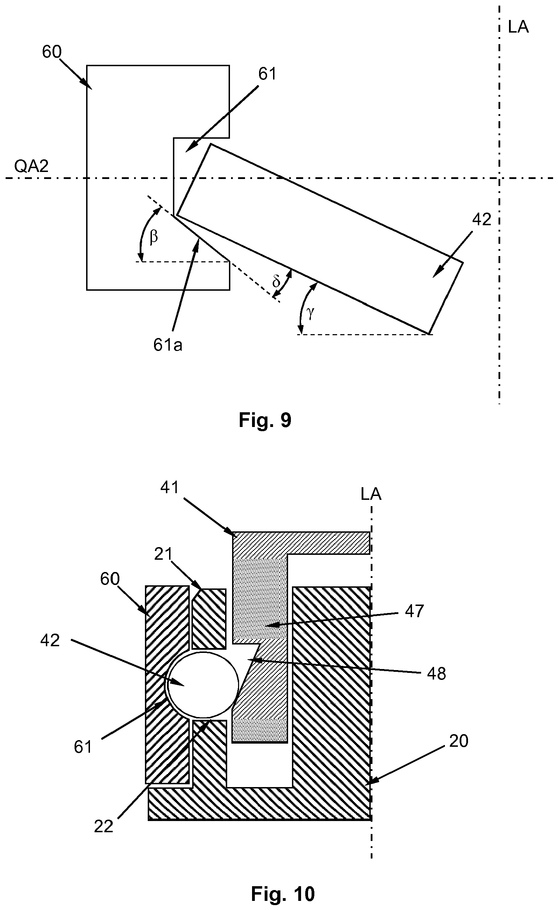

Bei dem in Fig. 2 gezeigten Ausführungsbeispiel sind die Durchgangslöcher 22 und die Verriegelungselemente 42 um einen bestimmten Winkel zur Querachse QA2 geneigt, was besondere Vorteile mit sich bringt, wie mit Bezug auf Fig. 8 und Fig. 9 näher erläutert wird.

Der außenliegende Endabschnitt der Verriegelungselemente 42 ist so ausgestaltet, dass beim Aufschieben der Reifenaufnahme auf den Achsadapter diese von der Reifenaufhahme gegen die Federkraft des Federelements 43 radial nach innen gedrückt werden, wie mit Bezug auf Fig. 8 näher erläutert wird.

Ferner weist das Entriegelungselement 42 an dem innenliegenden Endabschnitt eine Sackbohrung bzw. ein Sackloch auf, in das das Federelement 43 zumindest teilweise eingreift. Der dem Verriegelungselement 42 gegenüberliegende Endabschnitt des Federelements 43 greift zumindest teilweise in einen innenliegenden Abschnitt 22b des Durchgangsloches 22 ein, wobei das Durchgangsloch 22 zumindest teilweise von einem umlaufenden Bewegungsraum 25 unterbrochen wird.

An dem Achsadapter 20 ist eine Entriegelungseinrichtung 41 der Verriegelungseinrichtung angeordnet, wobei die Entriegelungseinrichtung 41 in axialer Richtung entlang der Längsachse LA bewegbar ist.

Die Entriegelungseinrichtung 41 weist eine umlaufende Seitenwandung 47 auf, die innerhalb der Seitenwandung 21 des Achsadapters 20 angeordnet ist und in den umlaufenden Bewegungsraum 25 eingreift. Erfindungsgemäß wirkt die Entriegelungseinrichtung 41 mit den Verriegelungselementen 42 zusammen, derart, dass beim Bewegen der Entriegelungseinrichtung 41 in axialer Richtung entlang zur Längsachse LA die Verriegelungselemente von der Verriegelungsposition in eine Entriegelungsposition bringbar sind, in der die Reifenaufnahme axial entriegelt ist und von dem Achsadapter 20 abgenommen werden kann. Das Zusammenwirken der Entriegelungseinrichtung mit den Verriegelungselementen wird mit Bezug auf Fig. 7 näher erläutert.

Ferner ist an dem Achsadapter 20 eine Abdeckkappe 50 angeordnet, die die Entriegelungseinrichtung 41 an dem Achsadapter sichert. Die Abdeckkappe 50 weist eine Öffnung auf, in die die Entriegelungseinrichtung 41 zumindest teilweise hineinragt, sodass die Entriegelungseinrichtung 41 von außen manuell betätigt werden kann.

Die Abdeckkappe 50 kann mit Befestigungsschrauben an der Seitenwandung des Achsadapters 20 befestigt werden. Alternativ kann die Abdeckkappe auch mittels eines Schraubgewindes auf den Achsadapter aufgeschraubt werden.

In dem Bereich, in dem die Entriegelungseinrichtung in die Öffnung der Abdeckkappe 50 hineinragt, weist die Abdeckkappe ein umlaufendes Dichtungselement 70 auf, um zu verhindern, dass Staub oder Flüssigkeit in das Innere des Achsadapters 20 gelangen kann. Entsprechende umlaufende Dichtungselemente sind auch in den Durchgangslöchern 22 vorgesehen, sodass auch zwischen der Wandung des Durchgangsloches und der Wandung der Verriegelungselemente kein Staub bzw. Flüssigkeit in das Innere des Achsadapters 20 gelangen kann.

Der Achsadapter 20, die Entriegelungseinrichtung 41, das Verriegelungselement 42 und die Abdeckkappe 50 können aus einem stabilen, vorzugsweise hochstabilen, Kunststoff hergestellt sein. Alternativ können diese Elemente des erfindungsgemäßen Schnellwechselsystems auch aus einem Metall hergestellt sein. In einer Ausgestaltung der Erfindung kann das erfindungsgemäße Schnellwechselsystem auch in einem 3D-Druckverfahren hergestellt werden.

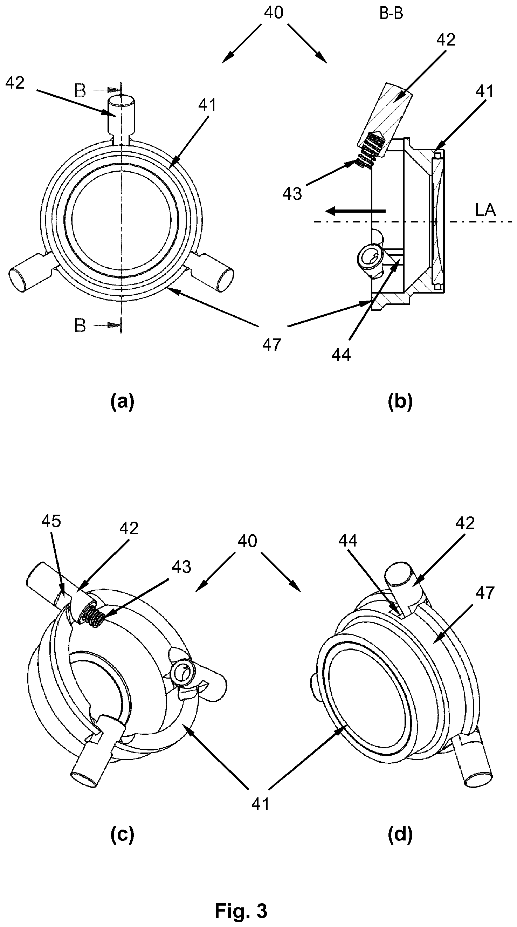

**Fig. 3** zeigt eine erfindungsgemäße Verriegelungseinrichtung 40, wobei in Abbildung (a) eine Ansicht von vorne, in Abbildung (b) eine Schnittansicht, in Abbildung (c) eine perspektivische Ansicht von hinten und in Abbildung (d) eine perspektivische Ansicht von vorne gezeigt sind.

Die erfindungsgemäße Verriegelungseinrichtung 40 umfasst eine Anzahl von Verriegelungselementen 42 und eine mit den Verriegelungselementen zusammenwirkende Entriegelungseinrichtung 41. Beim Bewegen der Entriegelungseinrichtung 41 in axialer Richtung entlang der Längsachse LA nach innen (durch den Pfeil angedeutet) werden die Verriegelungselemente 42 von einer Verriegelungsposition in eine Entriegelungsposition gebracht bzw. werden die Verriegelungselemente 42 freigegeben, sodass sie in eine Entriegelungsposition bringbar sind.

Wie in Fig. 3 erkennbar, kann die Entriegelungseinrichtung einen im Wesentlichen kreisförmigen Querschnitt aufweisen (andere Querschnitte sind ebenfalls möglich), wobei in der Seitenwandung 47 der Entriegelungseinrichtung 41 randseitige Schlitze 44 vorgesehen sind. Die Verriegelungselemente 42 weisen wandungsseitige Aussparungen 45 auf, wobei die Verriegelungselemente im Bereich dieser Aussparungen 45 in Eingriff mit den Schlitzen 44 gebracht werden.

Die Aussparungen 45 der Verriegelungselemente 42 weisen eine Seitenwandung auf, die um einen bestimmten Winkel zur Querachse des Verriegelungselements geneigt ist. Beim Drücken der Entriegelungseinrichtung 41 bzw. beim Bewegen der Entriegelungseinrichtung 41 in axialer Richtung entlang der Längsachse LA (in Fig. 3 durch den Pfeil in Abbildung (b) verdeutlicht) wird ein Endabschnitt des Schlitzes 44 gegen die schräge Seitenwandung der Aussparung 45 gedrückt, wodurch das Verriegelungselement 42 radial nach innen geschoben wird.

Das Entriegelungselement 41 weist hier einen kreisförmigen Querschnitt auf. In einer alternativen Ausgestaltung kann die Entriegelungseinrichtung 41 auch einen anderen Querschnitt aufweisen, bei dem in der Seitenwandung 47 ebenfalls eine Anzahl von randseitigen Schlitzen 44 vorgesehen sind.

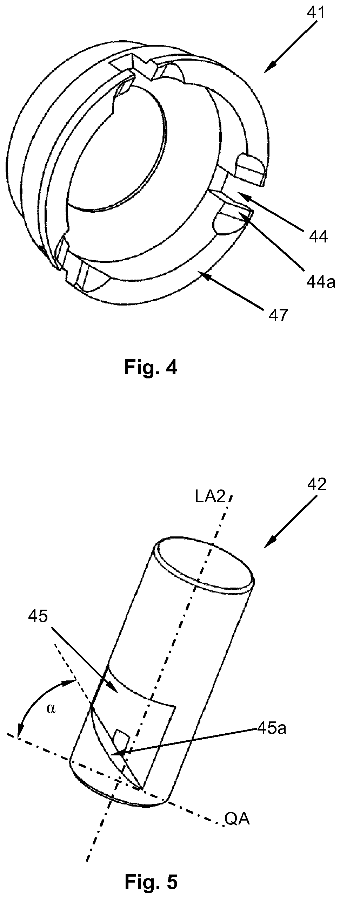

**Fig. 4** zeigt eine erfindungsgemäße Entriegelungseinrichtung 41 in einer perspektivischen Ansicht von hinten bzw. von unten. Deutlich erkennbar sind hier die in der Seitenwandung 47 vorgesehenen Schlitze 44, wobei die Schlitze 44 bzw. die Seitenwandungen der Schlitze 44 Endabschnitte 44a aufweisen, die in Eingriff mit den Aussparungen 45 der Verriegelungselemente 42 gebracht werden. Die Endabschnitte 44a sind hier nach innen abfallend ausgestaltet, wobei der Winkel der Endabschnitte 44a im Wesentlichen dem Winkel der schrägen Seitenwandung der Aussparung 45 des jeweiligen Verriegelungselementes 42 entspricht.

Die Entriegelungseinrichtung 41 ist vorzugsweise einteilig bzw. einstückig ausgestaltet.

**Fig. 5** zeigt ein Ausführungsbeispiel eines erfindungsgemäßen Verriegelungselements 42. Das Verriegelungselement 42 ist hier als Zapfen bzw. Bolzen ausgestaltet und weist eine im Wesentlichen zylinderförmige Form mit einem kreisförmigen Querschnitt auf. Wandungsseitig ist an dem Zapfen 42 eine Aussparung 45 vorgesehen, wobei vorteilhafterweise zwei gegenüberliegende identisch ausgestaltete Aussparungen 45 vorgesehen sind. Durch die Aussparung 45 werden zwei Seitenwandungen gebildet, wobei zumindest eine Seitenwandung 45a in einem Winkel α zur Querachse QA des Verriegelungselementes 42 steht. Die schräge Ausgestaltung der Seitenwandung 45a ist notwendig, damit das Verriegelungselement 42 beim Bewegen der Entriegelungseinrichtung 41 radial nach innen geschoben wird.

Das Verriegelungselement 42 kann auch einen anderen Querschnitt als einen kreisförmigen Querschnitt aufweisen. Wichtig ist lediglich, dass an dem Verriegelungselement 42 eine Aussparung 45 vorgesehen ist, die zumindest eine schräge Seitenwandung 45a aufweist.

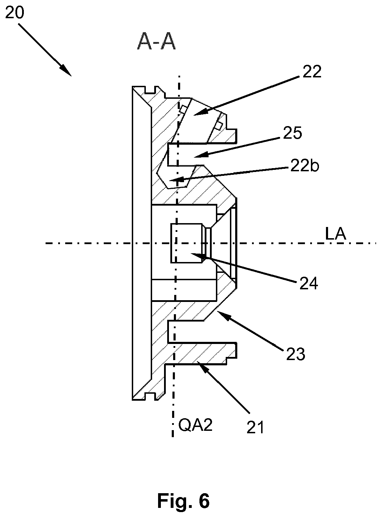

**Fig. 6** zeigt einen erfindungsgemäßen Achsadapter 20 in einer Schnittansicht entlang der Schnittachse A-A (siehe Fig. 2).

Deutlich erkennbar ist hier das in der Seitenwandung 21 vorgesehene Durchgangsloch 22, das sich bis zu einem innerhalb der Seitenwandung angeordneten Führungsbolzen 23 erstreckt, wobei der in dem Führungsbolzen 23 liegende Abschnitt 22b des Durchgangslochs 22 als Sackloch bzw. Sackbohrung ausgestaltet ist. In der Sackbohrung 22b wird das Federelement 43 angeordnet. Wenn das in dem Durchgangsloch 22 angeordnete Verriegelungselement beim Entriegeln radial nach innen geschoben wird, kann ein innenliegender Abschnitt des Verriegelungselementes auch in das Sackloch 22b hineingeschoben werden, wodurch eine sichere Führung des Verriegelungselementes gewährleistet wird.

Zwischen dem Führungsbolzen 23, der im Wesentlichen zylinderförmig ausgestaltet ist, und der umlaufenden Seitenwandung 21 des Achsadapters 20 ist ein umlaufender Bewegungsraum 25 ausgebildet, in den die Seitenwandung 47 der Entriegelungseinrichtung 41 zumindest teilweise eingreift. Der Führungsbolzen 23 bildet hierbei eine Führung für die Entriegelungseinrichtung 41, wenn diese in axialer Richtung relativ zum Achsadapter 20 bewegt wird.

In dem Führungsbolzen 23 kann eine axiale Bohrung 24 vorgesehen sein, in der eine Befestigungsschraube zum Befestigen des Achsadapters an der Radachse 12 eingebracht werden kann.

Wie ebenfalls in Fig. 6 erkennbar, ist das Durchgangsloch 22 um einen bestimmten Winkel zur Querachse QA2 des Achsadapters 20 nach außen geneigt. Dies hat bestimmte Vorteile, wie mit Bezug auf Fig. 9 näher erläutert wird. In einer alternativen Ausgestaltung kann die Längsachse des Durchgangsloches 22 auch parallel zur Querachse QA2 des Achsadapters 20 verlaufen. Hierbei muss allerdings der außenliegende Endabschnitt des Verriegelungselementes 42 anders ausgestaltet werden, um ein Bewegen des Verriegelungselementes radial nach innen beim Aufschieben der Reifenaufnahme auf den Achsadapter 20 optimal zu gewährleisten.

Der Achsadapter 20 kann ebenfalls einteilig bzw. einstückig ausgestaltet sein.

**Fig. 7** zeigt zwei verschiedene Beispiele zur Verdeutlichung des Zusammenwirkens der Entriegelungseinrichtung 41 mit dem Verriegelungselement 42, wobei in Abbildung (a) ein schräg angeordnetes Verriegelungselement und in Abbildung (b) ein im Wesentlichen horizontal angeordnetes Verriegelungselement verwendet wird.

In beiden Fällen weist das Verriegelungselement 42 eine quer zur Längsachse des Verriegelungselementes verlaufende Aussparung 45 auf, die nach innen hin von einer schrägen Seitenwandung 45a begrenzt wird.

In den beiden oberen Abbildungen ist jeweils ein Verriegelungselement 42 gezeigt, das sich in einer Verriegelungsposition befindet. Ein Endabschnitt 44a des Schlitzes 44 der Entriegelungseinrichtung 41 liegt hier an dem oberen Ende der schrägen Seitenwandung 45a auf. Beim Bewegen der Entriegelungseinrichtung 41 entlang der Längsachse LA des Achsadapters nach unten muss das Verriegelungselement 42 der Entriegelungseinrichtung 41 ausweichen, indem der Endabschnitt 44a entlang der schrägen Seitenwandung 45a nach unten gleitet, wodurch das Verriegelungselement 42 radial nach innen verschoben wird.

In den beiden unteren Abbildungen ist die Entriegelungseinrichtung 41 vollständig nach unten verschoben worden und hat ihre Endposition erreicht, wodurch sich die Verriegelungselemente 42 in einer Entriegelungsposition befinden. In der Entriegelungsposition ragen die Verriegelungselemente 42 nur mehr geringfügig oder gar nicht aus dem jeweiligen Durchgangsloch der Seitenwandung 21 des Achsadapters 20 heraus.

Wird die Entriegelungseinrichtung 21 wieder nach oben bewegt, bewegen sich die Verriegelungselemente 42 wieder radial nach außen, was beispielsweise durch die Federkraft eines hier nicht dargestellten Federelementes bewirkt wird.

Die unteren Endabschnitte 44a des Schlitzes 44 können an der Innenseite abgeschrägt sein, wobei der abgeschrägte Abschnitt im Wesentlichen parallel zur schrägen Seitenwandung 45a verläuft. Dadurch wird der Kraftaufwand für das Verschieben der Entriegelungseinrichtung 41 entlang der Längsachse LA nach unten minimiert bzw. optimiert. Die schräge Seitenwandung 45a kann zusätzlich mit einem Gleitmittel versehen werden, um die Reibung zwischen dem Endabschnitt 44a des Schlitzes 44 und der schrägen Seitenwandung 45a zu reduzieren.

**Fig. 8** zeigt einen Querschnitt durch einen Achsadapter 20 und einer Reifenaufnahme 60 zur Verdeutlichung des Wirkprinzips der axialen Verriegelungseinrichtung beim Aufschieben der Reifenaufnahme auf den Achsadapter.

In dem hier gezeigten Beispiel ist das Durchgangsloch 22 in der Seitenwandung 21 des Achsadapters 20 um einen bestimmten Winkel zur Querachse des Achsadapters nach außen geneigt, sodass das in dem Durchgangsloch angeordnete Verriegelungselement 42 beim Entriegeln radial schräg nach innen geschoben wird.

In der oberen Abbildung der Fig. 8 befindet sich die Reifenaufnahme 60 in einer Anfangsposition des Montagevorganges. Ein unterer bzw. ein der Fahrwagenachse zugewandter Abschnitt der Reifenaufnahme 60 wird gegen die außenliegende Bodenfläche des Verriegelungselementes 42 gedrückt, die aufgrund der schrägen Anordnung des Verriegelungselementes 42 in einem bestimmten Winkel zur Reifenaufnahme 60 geneigt ist. Durch das Aufschieben der Reifenaufnahme 60 auf den Achsadapter 20 drückt die Reifenaufnahme 60 gegen das Verriegelungselement 42, wodurch dieses radial schräg nach innen gedrückt wird bzw. verschoben wird.

Sobald die Reifenaufnahme 60 vollständig auf den Achsadapter 20 aufgeschoben worden ist, wird das Verriegelungselement 42 wieder radial schräg nach außen geschoben, was durch eine hier nicht gezeigte Feder bewerkstelligt wird, und in eine an der Innenwandung der Reifenaufnahme vorgesehene Aussparung hineingeschoben. Sobald das Verriegelungselement 42 in die Aussparung 61 eingreift, ist die Reifenaufnahme 60 axial verriegelt, sodass ein Lösen der Reifenaufnahme von dem Achsadapter ohne Betätigung der Entriegelungseinrichtung nicht mehr möglich ist.

**Fig. 9** zeigt eine vorteilhafte Anordnung des Verriegelungselementes 42 relativ zu der Reifenaufnahme 60 sowie eine vorteilhafte Ausgestaltung der Aussparung 61 in der Reifenaufnahme 60.

Die Reifenaufnahme 60 weist an der Innenwandung eine zumindest teilweise umlaufende Kulissenaussparung 61 auf, die von zwei Seitenwandungen seitlich begrenzt wird. Die axial innenliegende bzw. die der Fahrwagenachse zugewandte Seitenwandung 61a ist um einen ersten Winkel β zur Querachse QA2 der Reifenaufnahme geneigt, sodass die axial innenliegende Seitenwandung 61 a eine schräge Fläche bildet. Der erste Winkel β ist kleiner als 90°.

Das Verriegelungselement 42, das hier als zylinderförmiger Bolzen bzw. Stift ausgestaltet ist, ist um einen zweiten Winkel γ zur Querachse QA2 der Reifenaufnahme 60 geneigt, wobei der erste Winkel β größer ist als der zweite Winkel γ, sodass das Verriegelungselement 42 in einem Winkel δ zur axial innenliegenden Seitenwandung 61a steht. Der Winkel δ, d.h. die Differenz zwischen dem ersten Winkel β und dem zweiten Winkel γ ist so gewählt, dass sich zwischen der axial innenliegenden Seitenwandung 61 a und dem Verriegelungselement 42 in einer Verriegelungsposition ein Kraftschluss ergibt, der ein Lösen der Reifenaufnahme 60 von dem Achsadapter 20 verhindert. D.h. der Winkel δ zwischen der innenliegenden Seitenwandung 61a und dem Verriegelungselement 42 wird so gewählt, dass sich zwischen dem Verriegelungselement 42 und der Seitenwandung 61a eine Selbsthemmung ergibt. Zudem ist der Winkel δ so zu wählen, dass die auf das Verriegelungselement 42 wirkende Federkraft des hier nicht gezeigten Federelementes ausreicht, um das Verriegelungselement 42 entlang der innenliegenden Seitenwandung 61 a in die Kulissenaussparung 61 hineinzuschieben.

Durch die schräge Anordnung des Verriegelungselementes 42, dessen außenliegende Bodenfläche ebenfalls um einen bestimmten Winkel geneigt ist, und durch den Winkel δ zwischen der innenliegenden Seitenwandung 61a und dem Verriegelungselement 42 kann die Reifenaufnahme auf den Achsadapter aufgeschoben werden, ohne dass die Entriegelungseinrichtung 41 betätigt werden muss, mit der die Verriegelungselemente 42 ebenfalls radial nach innen geschoben werden können. Für die Montage der Reifenaufnahme 60 muss diese lediglich soweit auf den Achsadapter 20 aufgeschoben werden, bis die Verrieglungselemente 42 in die Kulissenaussparung 61 eingreifen bzw. einrasten. Hierzu ist weder ein Werkzeug notwendig, noch muss das Verriegelungselement 42 betätigt werden.

Um die Reifenaufnahmen 60 wieder von dem Achsadapter 20 zu lösen, muss die Entriegelungseinrichtung 41 gedrückt werden, wodurch die Verriegelungselemente radial nach innen geschoben bzw. aus der Kulissenaussparung 61 herausgezogen werden, wie mit Bezug auf Fig. 7 erläutert.

Ferner wird durch die in Fig. 9 gezeigte Anordnung des Verriegelungselementes 42 und der speziellen Ausgestaltung der zumindest teilweise umlaufenden Kulissenaussparung 61 gewährleistet, dass die auf den Achsadapter 20 aufgeschobene Reifenaufhahme 60 keinerlei axiales Spiel hat.

**Fig. 10** zeigt eine alternative Ausgestaltung eines erfindungsgemäßen Schnellwechselsystems. Im Unterschied zu den vorstehend beschriebenen Schnellwechselsystemen ist bei der in Fig. 10 gezeigten Ausführungsform anstelle eines Zapfens bzw. Bolzens eine Kugel als Verriegelungselement 42 vorgesehen.

Die Kugel 42 ist in dem Durchgangsloch 22 der Seitenwandung 21 des Achsadapters 20 angeordnet, wobei das Durchgangsloch vorzugsweise so ausgestaltet ist, dass die Kugel 42 nicht radial nach außen aus dem Durchgangsloch 22 herausfallen kann.

Die zumindest teilweise umlaufende Kulissenaussparung 61 an der Innenwandung der Reifenaufnahme 60 weist im Wesentlichen einen halbkreisförmigen Querschnitt auf, dessen Radius im Wesentlichen dem Radius der Kugel entspricht. Beim Aufschieben der Reifenaufnahme auf den Achsadapter 20 wird die Kugel 42 radial nach innen verschoben, wobei bei der hiergezeigten Ausgestaltung der Entriegelungseinrichtung 41 diese auch bei der Montage der Reifenaufnahme 60 gedrückt werden muss, um ein Verschieben der Kugel radial nach innen durch die Reifenaufnahme zu ermöglichen.

Sobald die Reifenaufnahme die endgültige Montageposition erreicht hat, wird die Kugel 42 mit Hilfe der Entriegelungseinrichtung 41 in die Kulissenaussparung 61 verschoben, sodass die Reifenaufnahme 60 axial verriegelt ist. Zum Verschieben der Kugel 42 in die Kulissenaussparung 61 wird die Entriegelungseinrichtung 41 in axialer Richtung nach außen bewegt, was beispielsweise mit einem der Entriegelungseinrichtung 41 zugeordneten Federelement bewerkstelligt werden kann.

Zum Entriegeln wird die Entriegelungseinrichtung in axialer Richtung nach innen verschoben, wobei eine Aussparung 48 in der Seitenwand 47 der Entriegelungseinrichtung 41 die Kugel 42 freigibt, sodass diese radial nach innen verschoben wird, wenn die Reifenaufnahme 60 von dem Achsadapter 20 abgezogen wird. Die Aussparung 48 in der Seitenwandung 47 ist so ausgestaltet, dass die Tiefe der Aussparung in axialer Richtung nach außen hin zunimmt, sodass eine im Wesentlichen keilförmige Aussparung 48 gebildet wird.

In alternativen, hier nicht gezeigten Ausführungsformen können als Verriegelungselemente 42 auch Haken oder Magnete vorgesehen sein. Ein Haken als Verriegelungselement 42 kann in dem Durchgangsloch 42 an einer Drehachse gelagert sein, wobei beim Verriegeln der Haken um diese Drehachse nach außen gedreht wird und mit einem Hakenelement in eine Aussparung 61 der Reifenaufnahme 60 eingreift. Die Seitenwandung 47 der Entriegelungseinrichtung 41 kann dabei so ausgestaltet sein, wie mit Bezug auf Fig. 10 gezeigt. Wenn die Entriegelungseinrichtung 41 axial nach innen geschoben wird, bildet die Aussparung 48 in der Seitenwandung 47 einen Bereich, in dem der Haken beim Entriegeln Platz findet. Beim Bewegen der Entriegelungseinrichtung 41 in entgegengesetzter Richtung wird der Haken wieder aus dem Durchgangsloch 22 herausgeschwenkt und von dem unteren Abschnitt der Seitenwandung 47 in der Verriegelungsposition gehalten.

**Fig. 11** zeigt verschiedene Ausgestaltungen einer Seitenwandung 21 eines Achsadapters 20 bzw. verschiedene Ausgestaltungen einer Innenwandung bzw. eines hinteren Abschnittes einer Innenwandung einer Reifenaufnahme. Der hintere Abschnitt der Reifenaufnahme korrespondiert hierbei mit der Seitenwandung 21 des Achsadapters 20, sodass die Reifenaufnahme 60 radial verriegelt ist, d.h. die Reifenaufhahme 60 ist um die Längsachse des Achsadapters nicht relativ zu dem Achsadapter drehbar.

Bei der in Abbildung (a) gezeigten Ausgestaltung weist die Seitenwandung 21 ein im Wesentlichen kreisförmiges Außenprofil auf, wobei an einer Stelle der Seitenwandung ein radialer Zapfen vorgesehen ist, der in eine radiale Nut der Reifenaufnahme 60 eingreift. Diese Ausgestaltung ist insbesondere dann vorteilhaft, wenn die Verriegelungselemente 42 in Umfangrichtung des Achsadapters 20 unregelmäßig angeordnet sind und die Reifenaufnahme 60 daher nur in einer einzigen bestimmten Position auf den Achsadapter 20 aufgeschoben werden kann.

Abbildung (b) zeigt einen Achsadapter 20, bei dem die Seitenwandung 21 eine elliptische bzw. ovale Außenkontur aufweist. Bei dieser Ausgestaltung kann die Reifenaufhahme 60 in zwei verschiedenen Positionen an den Achsadapter 20 aufgeschoben werden.

In Abbildung (c) ist ein Achsadapter 20 gezeigt, dessen Seitenwandung 21 ein im Wesentlichen rechteckiges Außenprofil aufweist.

Die Abbildung (d) zeigt einen Achsadapter 20 mit einer Seitenwandung 21, die ein Außenprofil in Form eines Zahnrades bzw. von Verzahnungen aufweist.

Die Abbildung (e) zeigt einen Achsadapter 20 mit einer Seitenwandung 21, die ein im Wesentlichen dreieckiges Außenprofil aufweist, wobei die Ecken abgerundet sind.

Andere Außenprofile der Seitenwandung 21 des Achsadapters 20, beispielsweise verschiedene Polygonformen, sind möglich, sofern diese geeignet sind, ein Drehen der Reifenaufnahme 60 auf dem Achsadapter 20 relativ zu dem Achsadapter zu verhindern.

In einer hier nicht gezeigten Ausführungsform eines erfindungsgemäßen Schnellwechselsystems kann die Reifenaufnahme 60 mittels eines Gewindes an dem Achsadapter 20 aufgeschraubt werden.

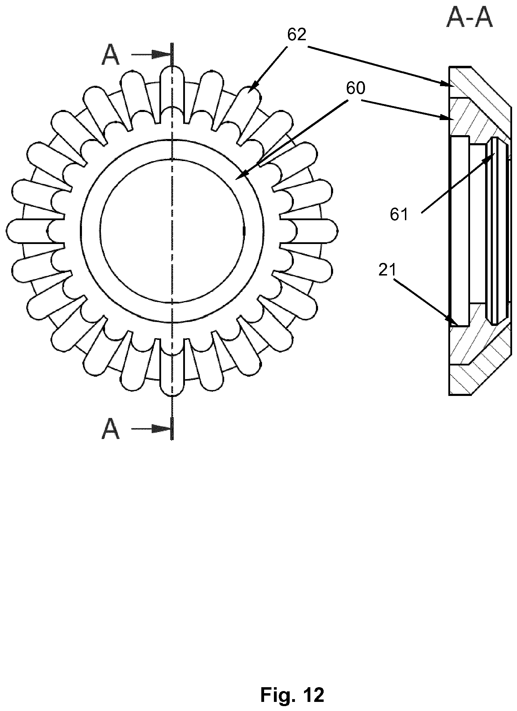

**Fig. 12** zeigt Beispiel einer Reifens 62 an einer Reifenaufnahme 60 in einer Ansicht von vorne und in einer Schnittansicht entlang einer Schnittachse A-A.

Der Reifen 62 ist hier so ausgestaltet, dass sich dieser besonders für Rohrleitungen bzw. Kanalrohre mit kleinerem Durchmesser eignet. Hierzu weist der Reifen eine schräge Reifenschulter auf, die eine gewisse Breite aufweist. Beim Befahren eines Kanals mit kleinerem Durchmesser bildet die Reifenschulter im Wesentlichen die Lauffläche des Reifens, während beim Befahren eines Kanals mit größerem Durchmesser die radial äußere an die Reifenschulter anschließende Fläche als Lauffläche dient.

In der Schnittansicht ist der der Fahrwagenachse zugewandte Abschnitt der Reifenaufnahme 60 gezeigt, der in seiner Form der Seitenwandung 21 des Achsadapters angepasst ist und so ein Drehen der Reifenaufnahme um die Längsachse der Fahrwagenachse relativ zum Achsadapters verhindert. Diesem Abschnitt folgt axial nach außen die umlaufende Kulissenaussparung 61, in die die Verriegelungselemente in Eingriff bringbar sind.

Der Reifen 62 kann aus einem Gummi oder einem vorzugsweisen abriebfesten Kunststoff hergestellt sein. Der Reifen kann auch ein anderes Laufprofil aufweisen, als in Fig. 12 gezeigt.

### Bezugszeichen:

- 10: Fahrwagen bzw. Inspektionswagen
- 12: Rad- bzw. Fahrwagenachse
- 13: radialer Zapfen an der Fahrwagenachse
- 20: Achsadapter
- 21: Seitenwandung des Achsadapters 20
- 22: Durchgangsloch in der Wandung 21
- 22b: innenliegender Abschnitt des Durchgangsloches 22 zur Aufnahme des Federelements 43
- 23: Führungsbolzen
- 24: axiale Bohrung für eine Befestigungsschraube
- 25: umlaufender Bewegungsraum innerhalb der Seitenwandung 21
- 30: Schnellwechselsystem
- 40: axiale Verriegelungseinrichtung
- 41: Entriegelungseinrichtung (Entriegelungskappe) der axialen Verriegelungseinrichtung 40
- 42: Verriegelungselement (z.B. Zapfen oder Kugel) der axialen Verriegelungseinrichtung 40
- 43: Federelement
- 44: randseitiger Schlitz zum Eingriff in das Verriegelungselement 42
- 44a: Endabschnitt des Schlitzes 44
- 45: Aussparungen am Verriegelungselement 42
- 45a: Seitenwandung der Aussparung 45
- 47: Seitenwandung der Entriegelungseinrichtung 41
- 48: Aussparungen in der Seitenwandung 47
- 50: Abdeckkappe
- 60: Reifenaufnahme
- 61: Kulissenaussparung an der Innenwandung der Reifenaufnahme 60
- 61a: (axial innenliegende) Seitenwandung der Kulissenaussparung 61
- 62: Reifen
- 70, 71: Dichtungselemente, z.B. Dichtungsringe
- LA: Längsachse des Schnellwechselsystem 30
- LA2: Längsachse des Zapfens bzw. de Stiftes 42
- QA: Querachse des Zapfens bzw. de Stiftes 42
- QA2: Querachse der Reifenaufnahme 60
- α,β,γ,δ: Winkel

## Patentansprüche

1. Schnellwechselsystem (30) für Fahrwagenräder eines Inspektionswagens (10), insbesondere Kanalinspektions- und/oder Kanalreinigungswagen, umfassend einen Achsadapter (20) und eine Verriegelungseinrichtung (40) zum axialen Verriegeln einer Reifenaufnahme (60) auf dem Achsadapter, wobei
- die Verriegelungseinrichtung (40) zumindest ein Verriegelungselement (42) und eine mit dem zumindest einen Verriegelungselement zusammenwirkende Entriegelungseinrichtung (41) umfasst, wobei das zumindest eine Verriegelungselement in einer Verriegelungsposition die Reifenaufnahme auf dem Achsadapter axial verriegelt, und
- die Entriegelungseinrichtung (41) und das zumindest eine Verriegelungselement (42) so zusammenwirken, dass beim Bewegen der Entriegelungseinrichtung das zumindest eine Verriegelungselement (42) von der Verriegelungsposition in eine Entriegelungsposition bringbar ist, in der die Reifenaufnahme (60) axial entriegelt ist,
**dadurch gekennzeichnet, dass**
in einer Seitenwandung (21) des Achsadapters (20) zumindest ein Durchgangsloch (22) vorgesehen ist, in dem das Verriegelungselement (42) relativ zum Durchgangsloch bewegbar angeordnet ist, wobei das Verriegelungselement in der Verriegelungsposition zumindest teilweise aus dem Durchgangsloch herausragt und dadurch die Reifenaufnahme (60) axial verriegelt.

2. Schnellwechselsystem nach dem vorhergehenden Anspruch, wobei die Entriegelungseinrichtung in axialer Richtung entlang der Längsachse (LA) des Schnellwechselsystems bewegbar ist.

3. Schnellwechselsystem nach einem der vorhergehenden Ansprüche, wobei das Verriegelungselement (42) einen Stift, einen Zapfen, zumindest eine Kugel, einen Haken oder einen Magneten umfasst.

4. Schnellwechselsystem nach dem vorhergehenden Anspruch wobei der Stift oder der Zapfen (42) zumindest eine wandungsseitige Aussparung (45) aufweist, die im Wesentlichen quer zur Längsachse (LA2) des Stiftes bzw. des Zapfens (42) verläuft, und wobei die wandungsseitige Aussparung (45) eine schräge Seitenwandung (45a) aufweist, die in einem Winkel (α) zur Querachse (QA) des Stiftes bzw. des Zapfens (42) angeordnet ist.

5. Schnellwechselsystem nach einem der vorhergehenden Ansprüche wobei die Entriegelungseinrichtung (41) als Entriegelungskappe mit einer umlaufenden Seitenwandung (47) ausgestaltet ist, wobei die Entriegelungseinrichtung (41) so relativ zum Achsadapter (20) anordenbar ist, dass die Seitenwandung (47) der Entriegelungskappe zumindest teilweise innerhalb der Seitenwandung (21) des Achsadapters (20) angeordnet ist und dass die Entriegelungskappe in axialer Richtung entlang der Längsachse (LA) des Schnellwechselsystem relativ zum Achsadapter (20) bewegbar ist.

6. Schnellwechselsystem nach dem vorhergehenden Anspruch und nach einem der Ansprüche 3 oder 4, wobei in der Seitenwandung (47) der Entriegelungskappe (41) zumindest ein randseitiger Schlitz (44) vorgesehen ist, in den der Stift oder der Zapfen (42) im Bereich seiner wandungsseitigen Aussparung (45) in Eingriff bringbar ist, wobei die Entriegelungskappe (41) und der Stift bzw. der Zapfen (42) so zusammenwirken, dass beim Bewegen der Entriegelungskappe in axialer Richtung ein Endabschnitt (44a) des Schlitzes (44) auf die schräge Seitenwandung (45a) der wandungsseitigen Aussparung (45) des Stiftes oder des Zapfens (42) wirkt und dadurch den Stift bzw. den Zapfen (42) radial nach innen bewegt.

7. Schnellwechselsystem nach einem der vorhergehenden Ansprüche, wobei dem Verriegelungselement (42) ein Federelement (43) zugeordnet ist, dessen Federkraft das Verriegelungselement (42) radial nach außen drückt.

8. Schnellwechselsystem nach Anspruch 3, wobei die Kugel (42) in der Verriegelungsposition in eine Kulissenaussparung (61) an der Innenwandung der Reifenaufnahme (60) eingreift, wobei an der Außenwand der Seitenwandung (47) der Entriegelungseinrichtung (41) eine Aussparung (48) vorgesehen ist, wobei die Tiefe der Aussparung (48) in axialer Richtung zunimmt und wobei die Kugel (42) in die Aussparung (48) in Eingriff bringbar ist, und wobei bei einem axialen Bewegen der Entriegelungseinrichtung (41) relativ zum Achsadapter (20) und
- in Richtung zur geringeren Tiefe der Aussparung (48) die Kugel (42) in die Entriegelungsposition bringbar ist, und
- in Richtung zur größeren Tiefe der Aussparung (48) die Aussparung (48) ein Bewegen der Kugel (42) in die Verriegelungsposition bewirkt.

9. Schnellwechselsystem nach einem der vorhergehenden Ansprüche, wobei der Achsadapter (20) einen koaxialen Führungsbolzen (23) aufweist, der in axialer Richtung in eine dafür vorgesehene Aussparung der Entriegelungseinrichtung (41) eingreift, wobei in dem Führungsbolzen (23) Sackbohrungen (22b) vorgesehen sind, die koaxial zu den Durchgangslöchern (22) der Seitenwandung (21) des Achsadapters (20) angeordnet sind, zur Aufnahme der Federelemente (43).

10. Schnellwechselsystem nach einem der vorhergehenden Ansprüche, wobei die Seitenwandung (21) des Achsadapters (20) zumindest bis zu einer vorbestimmten Höhe einen Außenquerschnitt aufweist, der mit einem Innenquerschnitt der Reifenaufnahme (60) korrespondiert und ein Drehen der Reifenaufnahme um die Längsachse (LA) des Schnellwechselsystems relativ zum Achsadapter verhindert.

11. Reifenaufnahme (60) für ein Schnellwechselsystem (30) nach einem der vorhergehenden Ansprüche, wobei die Reifenaufnahme an einer Innenwandung eine zumindest teilweise umlaufende Kulissenaussparung (61) aufweist, in die die Verriegelungselemente (42) des Schnellwechselsystems in Eingriff bringbar sind und die Reifenaufnahme axial verriegeln, wenn die Reifenaufnahme auf den Achsadapter (20) des Schnellwechselsystems axial aufgeschoben wird.

12. Reifenaufnahme nach Anspruch 11, wobei die umlaufende Kulissenaussparung (61) zwei gegenüberliegende Seitenwandungen aufweist, wobei eine axial innenliegende Seitenwandung (61a) der beiden Seitenwandungen um einen ersten Winkel (β) zur Querachse (QA2) der Reifenaufnahme (60), der kleiner als 90° ist, geneigt ist, wobei das Verriegelungselement (42) des Schnellwechselsystems (30) um einen zweiten Winkel (γ) zur Querachse (QA2) der Reifenaufnahme (60), der kleiner als 90° ist, geneigt ist, und wobei der erste Winkel (β) größer ist als der zweite Winkel (γ).

13. Reifenaufnahme nach dem vorhergehenden Anspruch, wobei die Differenz (δ = β - γ) zwischen dem ersten Winkel (β) und dem zweiten Winkel (γ) so gewählt ist, dass sich zwischen der axial innenliegenden Seitenwandung (61a) und dem Verriegelungselement (42) in einer Verriegelungsposition ein Kraftschluss ergibt, der ein Lösen der Reifenaufnahme (60) von dem Achsadapter (20) verhindert.

14. Schnellwechseleinrichtung, umfassend ein Schnellwechselsystem (30) nach einem der Ansprüche 1 bis 10 und eine mit dem Schnellwechselsystem korrespondierende Reifenaufnahme (60) nach einem der Ansprüche 11 bis 13.

15. Inspektionswagen (10), insbesondere Kanalinspektions- und/oder Kanalreinigungswagen, mit einer Anzahl von Schnellwechselsystemen (30) nach einem der Ansprüche 1 bis 10, wobei die Schnellwechselsysteme (30), vorzugsweise lösbar an den Radachsen (12) des Inspektionswagens angebracht sind und/oder wobei an einem Endabschnitt der Radachse (12) ein radialer Zapfen (13) angeordnet ist, der in eine entsprechende Aussparung des Achsadapters (20) des Schnellwechselsystems (30) in Eingriff bringbar ist und ein Drehen des Schnellwechselsystems um die Längsachse der Radachse relativ zur Radachse verhindert.

## Claims

1. A quick-change system (30) for crawler wheels of an inspection crawler (10), in particular a sewer inspection and/or sewer cleaning crawler, comprising a shaft adapter (20) and an interlocking device (40) for axially interlocking a tyre retainer (60) with the shaft adapter, wherein
- the interlocking device (40) comprises at least one interlocking member (42) and an unlocking device (41) cooperating with said at least one interlocking member, wherein said at least one interlocking member, when in an interlocking position, axially interlocks the tyre retainer with the shaft adapter, and
- the unlocking device (41) and the at least one interlocking member (42) cooperate in such a manner that by moving the unlocking device the at least one interlocking member (42) may be moved from the interlocking position to an unlocked position in which the tyre retainer (60) is axially unlocked,
**characterised in that**
a lateral wall (21) of the shaft adapter (20) has at least one through hole (22) provided therein in which the interlocking member (42) is disposed in such a manner that it is movable relative to said through hole, wherein said interlocking member protrudes at least partially from said through hole when it is in the interlocking position and thus becomes axially interlocked with the tyre retainer (60).

2. The quick-change system as claimed in the preceding claim, wherein the unlocking device is movable in an axial direction along the longitudinal axis (LA) of the quick-change system.

3. The quick-change system as claimed in any of the preceding claims, wherein the interlocking member (42) comprises a pin, a peg, at least one ball, a hook or a magnet.

4. The quick-change system as claimed in the preceding claim, wherein the pin or peg (42) has at least one wall-side recess (45) extending essentially transversely to the longitudinal axis (LA2) of the pin or peg (42), and wherein the wall-side recess (45) has a slanted lateral wall (45a) which is disposed at an angle (α) relative to the transverse axis (QA) of the pin or peg (42).

5. The quick-change system as claimed in any of the preceding claims, wherein the unlocking device (41) is realised as an unlocking cap having a circumferential lateral wall (47), wherein the unlocking device (41) may be arranged relative to the shaft adapter (20) in such a manner that the lateral wall (47) of the unlocking cap is arranged at least partially within the lateral wall (21) of the shaft adapter (20) and that the unlocking cap is movable relative to the shaft adapter (20) in an axial direction along the longitudinal axis (LA) of the quick-change system.

6. The quick-change system as claimed in the preceding claim and in any one of claims 3 or 4, wherein the lateral wall (47) of the unlocking cap (41) has at least one slot (44) provided at its edge and with which the pin or peg (42) may be engaged in the region of its wall-side recess (45), wherein the unlocking cap (41) and the pin or peg (42) cooperate in such a manner that when the unlocking cap is moved in an axial direction, one end portion (44a) of the slot (44) acts on the slanted lateral wall (45a) of the wall-side recess (45) of the pin or peg (42), thus moving the pin or peg (42) radially inward.

7. The quick-change system as claimed in any of the preceding claims, wherein the interlocking member (42) has a spring element (43) associated therewith the spring force of which pushes the interlocking member (42) radially outward.

8. The quick-change system as claimed in claim 3, wherein the ball (42) is engaged in a slide guide recess (61) formed on the inner wall of the tyre retainer (60) when it is in its interlocking position, wherein the outer wall surface of the lateral wall (47) of the unlocking device (41) has a recess (48) provided therein, wherein the depth of said recess (48) increases in an axial direction, and wherein the ball (42) may be engaged with the recess (48), and wherein, when the unlocking device (41) is being axially moved relative to the shaft adapter (20),
- such axial movement in the direction of the lower depth of said recess (48) causes the ball (42) to be moved to the unlocked position, and
- such axial movement in the direction of the greater depth of said recess (48) results in said recess (48) causing the ball (42) to be moved to the interlocking position.

9. The quick-change system as claimed in any of the preceding claims, wherein the shaft adapter (20) has a coaxial guide bolt (23) which, in an axial direction, engages with a recess of the unlocking device (41) provided for this purpose, said guide bolt (23) having blind holes (22b) provided therein which are disposed coaxially with the through holes (22) of the lateral wall (21) of the shaft adapter (20) for receiving spring elements (43).

10. The quick-change system as claimed in any of the preceding claims, wherein the lateral wall (21) of the shaft adapter (20), at least up to a predetermined height, has an external cross-section which corresponds to an internal cross-section of the tyre retainer (60) and prevents the tyre retainer from rotating about the longitudinal axis (LA) of the quick-change system relative to the shaft adapter.

11. A tyre retainer (60) for a quick-change system (30) as claimed in any of the preceding claims, wherein the tyre retainer, on an inner wall thereof, has an at least partially circumferential slide guide recess (61) with which the interlocking members (42) of the quick-change system may be engaged and which axially interlocks the tyre retainer when said tyre retainer is axially slid onto the shaft adapter (20) of the quick-change system.

12. The tyre retainer as claimed in claim 11, wherein the circumferential slide guide recess (61) has two opposing lateral walls, wherein an axially inner lateral wall (61 a) of the two lateral walls is inclined with respect to the transverse axis (QA2) of the tire retainer (60) by a first angle (β) which is smaller than 90°, wherein the interlocking member (42) of the quick-change system (30) is inclined with respect to the transverse axis (QA2) of the tyre retainer (60) by a second angle (γ) which is smaller than 90°, and wherein the first angle (β) is greater than the second angle (γ).

13. The tyre retainer as claimed in the preceding claim, wherein the difference (δ = β - y) between the first angle (β) and the second angle (γ) is selected such that in an interlocking position a force-fitted engagement is created between the axially inner lateral wall (61 a) and the interlocking member (42) which thus prevents the tyre retainer (60) from becoming disengaged with the shaft adapter (20).

14. A quick-change device comprising a rapid change system (30) as claimed in any one of claims 1 to 10 and a tyre retainer (60) as claimed in any one of claims 11 to 13 which corresponds to said quick-change system.

15. An inspection crawler (10), in particular a sewer inspection and/or sewer cleaning crawler having a number of quick-change systems (30) as claimed in any one of claims 1 to 10, wherein the quick-change systems (30) are preferably mounted to the wheel shafts (12) of the inspection crawler in a disengageable manner and/or wherein on one end portion of the wheel shaft (12) a radial peg (13) is arranged which may be engaged with a corresponding recess of the shaft adapter (20) of the quick-change system (30) and prevents said quick-change system from rotating about the longitudinal axis of the wheel shaft relative to said wheel shaft.

## Revendications

1. Système de changement rapide (30) pour roues de chariot d'un chariot d'inspection (10), en particulier d'un chariot d'inspection de canalisation et/ou de nettoyage de canalisation, comprenant un adapteur d'essieu (20) et un dispositif de verrouillage (40) destiné à verrouiller axialement un élément récepteur de pneu (60) sur ledit adapteur d'essieu, dans lequel
- le dispositif de verrouillage (40) comprend au moins un élément de verrouillage (42) et un dispositif de déverrouillage (41) coopérant avec ledit au moins un élément de verrouillage, ledit au moins un élément de verrouillage, lorsqu'il se trouve dans une position de verrouillage, verrouillant axialement l'élément récepteur de pneu sur l'adapteur d'essieu, et
- le dispositif de déverrouillage (41) et ledit au moins un élément de verrouillage (42) coopèrent de telle sorte qu'il est possible, en déplaçant le dispositif de déverrouillage, de faire passer ledit au moins un élément de verrouillage (42) de la position de verrouillage dans une position de déverrouillage dans laquelle l'élément récepteur de pneu (60) est déverrouillé axialement,
**caractérisé en ce que**
dans une paroi latérale (21) de l'adapteur d'essieu (20) est prévu au moins un trou de passage (22) dans lequel l'élément de verrouillage (42) est disposé de manière à pouvoir être déplacé par rapport audit trou de passage, l'élément de verrouillage, lorsqu'il se trouve dans la position de verrouillage, sortant au moins partiellement du trou de passage afin de verrouiller ainsi axialement l'élément récepteur de pneu (60).

2. Système de changement rapide selon la revendication précédente, dans lequel le dispositif de déverrouillage peut être déplacé en sens axial le long de l'axe longitudinal (LA) du système de changement rapide.

3. Système de changement rapide selon l'une quelconque des revendications précédentes, dans lequel l'élément de verrouillage (42) comprend une tige, un tenon, au moins une sphère, un crochet ou un aimant.

4. Système de changement rapide selon l'une quelconque des revendications précédentes, dans lequel la tige ou le tenon (42) présente au moins un évidement (45) situé côté paroi, lequel s'étend essentiellement de manière transversale à l'axe longitudinale (LA2) de la tige ou du tenon (42), et dans lequel l'évidement (45) situé côté paroi présente une paroi latérale inclinée (45a) qui est disposée selon un angle (α) par rapport à l'axe transversal (QA) de la tige ou du tenon (42).

5. Système de changement rapide selon l'une quelconque des revendications précédentes, dans lequel le dispositif de déverrouillage (41) est réalisé en tant que capuchon de déverrouillage pourvu d'une paroi latérale circonférentielle (47), le dispositif de déverrouillage (41) pouvant être disposé par rapport à l'adapteur d'essieu (20) de telle sorte que la paroi latérale (47) du capuchon de déverrouillage est disposée au moins partiellement à l'intérieur de la paroi latérale (21) de l'adapteur d'essieu (20) et que le capuchon de déverrouillage peut être déplacé par rapport à l'adapteur d'essieu (20) en sens axial le long de l'axe longitudinal (LA) du système de changement rapide.

6. Système de changement rapide selon la revendication précédente et selon l'une des revendications 3 ou 4, dans lequel dans la paroi latérale (47) du capuchon de déverrouillage (41) est prévue au moins une fente (44) ménagée sur le bord avec laquelle il est possible de mettre en prise la tige ou le tenon (42), et ce dans la zone de son évidement (45) situé côté paroi, le capuchon de déverrouillage (41) et la tige ou le tenon (42) coopérant de telle sorte que lorsque le capuchon de déverrouillage est déplacé en sens axial, une partie d'extrémité (44a) de la fente (44) agit sur la paroi latérale oblique (45a) de l'évidement (45) de la tige ou du tenon (42) situé côté paroi, ce qui fait se déplacer ladite tige ou ledit tenon (42) radialement vers l'intérieur.

7. Système de changement rapide selon l'une quelconque des revendications précédentes, dans lequel est affecté à l'élément de verrouillage (42) un élément ressort (43) dont la force de ressort presse ledit élément de verrouillage (42) radialement vers l'extérieur.

8. Système de changement rapide selon la revendication 3, dans lequel la sphère (42), dans la position de verrouillage, entre en prise avec un évidement de coulissement (61) ménagé dans la paroi intérieure de l'élément récepteur de pneu (60), dans lequel un évidement (48) est prévu dans la paroi extérieure de la paroi latérale (47) du dispositif de déverrouillage (41), la profondeur de l'évidement (48) augmentant en sens axial et la sphère (42) pouvant être mise en prise avec ledit évidement (48), et dans lequel un déplacement axial du dispositif de déverrouillage (41) par rapport à l'adapteur d'essieu (20) et
- en direction de la moins grande profondeur de l'évidement (48) permet de mettre la sphère (42) dans la position de déverrouillage, et
- en direction de la plus grande profondeur de l'évidement (48) provoque un déplacement de la sphère (42) vers la position de verrouillage.

9. Système de changement rapide selon l'une quelconque des revendications précédentes, dans lequel l'adapteur d'essieu (20) présente une broche de guidage coaxiale (23) qui entre en prise, en sens axial, avec un évidement prévu à cet effet dans le dispositif de déverrouillage (41), dans la broche de guidage (23) étant prévus des trous borgnes (22b) qui sont disposés de manière coaxiale aux trous de passage (22) de la paroi latérale (21) de l'adapteur d'essieu (20) en vue de recevoir les éléments ressort (43).

10. Système de changement rapide selon l'une quelconque des revendications précédentes, dans lequel la paroi latérale (21) de l'adapteur d'essieu (20) présente, au moins jusqu'à une hauteur prédéterminée, une section transversale extérieure qui correspond à une section transversale intérieure de l'élément récepteur de pneu (60) et empêche ledit élément récepteur de pneu de tourner autour de l'axe longitudinal (LA) du système de changement rapide par rapport à l'adapteur d'essieu.

11. Élément récepteur de pneu (60) pour un système de changement rapide (30) selon l'une quelconque des revendications précédentes, dans lequel ledit élément récepteur de pneu présente, sur une paroi intérieure, un évidement de coulissement (61) au moins partiellement circonférentielle avec lequel les éléments de verrouillage (42) du système de changement rapide peuvent être mis en prise et verrouiller axialement l'élément récepteur de pneu lorsque ledit élément récepteur de pneu est glissé axialement sur l'adapteur d'essieu (20) du système de changement rapide.

12. Élément récepteur de pneu selon la revendication 11, dans lequel l'évidement de coulissement circonférentiel (61) présente deux parois latérales opposées, dans lequel l'une des deux parois latérales, à savoir la paroi latérale (61 a) située axialement à l'intérieur, est inclinée par rapport à l'axe transversal (QA2) de l'élément récepteur de pneu (60) selon un premier angle (β) qui est inférieur à 90°, dans lequel l'élément de verrouillage (42) du système de changement rapide (30) est incliné par rapport à l'axe transversal (QA2) de l'élément récepteur de pneu (60) selon un deuxième angle (γ) qui est inférieur à 90° et dans lequel le premier angle (β) est supérieur au deuxième angle (γ).

13. Élément récepteur de pneu selon la revendication précédente, dans lequel la différence (δ = β - γ) entre le premier angle (β) et le deuxième angle (γ) est choisie de manière à obtenir, dans une position de verrouillage, une conjugaison de force entre la paroi latérale (61 a) située axialement à l'intérieur et l'élément de verrouillage (42), laquelle empêche ledit élément récepteur de pneu (60) de se désolidariser de l'adapteur d'essieu (20).

14. Dispositif de changement rapide comprenant un système de changement rapide (30) selon l'une quelconque des revendications 1 à 10 et un élément récepteur de pneu (60) selon l'une quelconque des revendications 11 à 13 lequel correspond audit système de changement rapide.

15. Chariot d'inspection (10), en particulier chariot d'inspection de canalisation et/ou de nettoyage de canalisation, avec un nombre donné de systèmes de changement rapide (30) selon l'une quelconque des revendications 1 à 10, dans lequel les systèmes de changement rapide (30) sont disposés de préférence de manière amovible sur les essieux de roue (12) du chariot d'inspection, et/ou dans lequel sur une partie d'extrémité de l'essieu de roue (12) est disposé un tenon radial (13) qui peut être mis en prise avec un évidement correspondant de l'adapteur d'essieu (20) du système de changement rapide (30) et empêche le système de changement rapide de tourner autour de l'axe longitudinal de l'essieu de roue par rapport audit essieu de roue.
